Europäisches Patentamt

European Patent Office

Office européen des brevets

(19)

(11) Numéro de publication: **0 210 908**

**A1**

(12) **DEMANDE DE BREVET EUROPEEN**

(21) Numéro de dépôt: 86401526.8

(22) Date de dépôt: 09.07.86

(51) Int. Cl.⁴: **G01F 9/00**

(30) Priorité: 11.07.85 FR 8510647

(43) Date de publication de la demande:
04.02.87 Bulletin 87/06

(84) Etats contractants désignés:
**DE FR GB IT SE**

(71) Demandeur: **JAEGER**
**2, rue Baudin**
**F-92303 Levallois-Perret(FR)**

(72) Inventeur: **Bouveret, Georges**
**7, Mail des Thuyas**
**F-78180 Montigny Le Bretonneux(FR)**
Inventeur: **Reymond, Philippe**
**26, rue Georges Boulet**
**F-91330 Yerres(FR)**

(74) Mandataire: **Schrimpf, Robert et al**
**Cabinet Regimbeau 26, Avenue Kléber**
**F-75116 Paris(FR)**

(54) **Débitmètre à double flux pour la mesure de débit ou de consommation d'un fluide.**

(57) L'invention est relative à un débitmètre double flux pour la mesure de consommation d'un fluide.

Le débitmètre est monté sur les voies aller et retour de l'installation d'alimentation en fluide, de façon à permettre la mesure des débits de la canalisation aller(A) et retour(B). Des moyens de mise en forme (5) d'impulsions des signaux représentatifs du débit du fluide conduit par les voies (A) et (B) permettent d'alimenter des moyens de comptage-décomptage (5) en impulsions de comptage. Lorsque le nombre d'impulsions de comptage sur la voie (B) est supérieur au nombre d'impulsions sur la voie aller (A), les impulsions de la voie de retour (B) sont mises en réserve de façon à être prises en compte par les moyens de comptage (5).

Application à la mesure de débit de carburant alimentant le moteur mobile ou stationnaire.

FIG . 1

# DEBITMETRE A DOUBLE FLUX POUR LA MESURE DE DEBIT OU DE CONSOMMATION D'UN FLUIDE

La présente invention est relative à un débitmètre à double flux pour la mesure de débit ou de consommation d'un fluide.

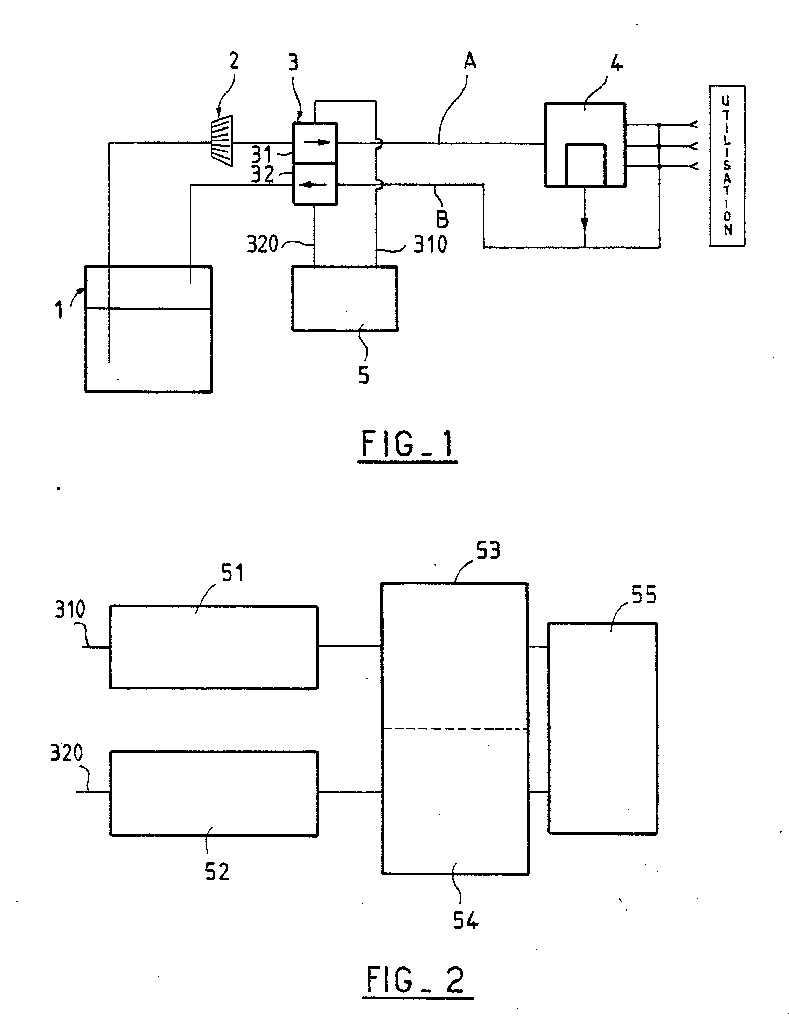

Les systèmes de mesure de débit à double flux pour la mesure de débit ou de consommation d'un fluide d'une installation comprenant une voie dite aller comportant, par exemple, un réservoir 1, une pompe d'alimentation 2, un circuit d'utilisation 4 reliés par une canalisation aller A et une voie dite retour comprenant une canalisation B assurant la liaison entre l'utilisation 4 et le réservoir 1 sont connus. Ainsi que représenté en figure 1, un débitmètre double flux 3 comportant deux cellules de mesure 31 et 32 connectées en série dans chaque voie A et B respectivement permet, après traitement dans un circuit de traitement, d'obtenir une information représentative du débit effectivement consommé à l'utilisation. Cette information correspond en principe à la différence instantanée entre l'information de débit délivrée pour chaque cellule de mesure sur les voies aller et retour.

De tels débitmètres ont fait l'objet notamment d'une description détaillée dans la revue ÖLHYDRAULIC UND PNEUMATIC vol.11 no.9, Septembre 1967-Krauskopf Verlag für Wirtschaft GmbH (Mainz, BRD) par l'article de O.ENGLERT "Ovalradzähler für die Automatisierung" p.346-357.

Si ce genre de dispositif est susceptible de donner des informations de très grande précision pour des installations à poste fixe, en raison notamment de la précision de mesure de débit de ce type d'appareillage,dit débitmètre à roues ovales, il n'en va pas de même, dans le cas où ces instal lations sont embarquées sur un véhicule soumis à des accélérations ou décélérations d'amplitude même moyenne en raison de la faible inertie du fluide dans les canalisations. En effet, les accélérations ou décélérations du véhicule sont susceptibles de modifier localement la vitesse d'écoulement du fluide dans les voies aller et/ou retour, ce qui dans les cas extrêmes, peut conduire à des lectures d'information de consommation,à l'utilisation,négative, le flux ou débit de fluide dans les canalisations A et B étant modifié en opposition localement et temporairement au niveau de chaque cellule de mesure. Le plus souvent, les débitmètres de l'art connu ne permettent pas de tenir compte de telles perturbations si ce n'est sur un temps de mesure important au cours duquel ces perturbations peuvent se compenser. Ce type d'appareilla ge ne permet donc pas d'effectuer une mesure de débit ou de consommation instantanée présentant le degré de fiabilité et de fidélité requis dans les appareils de mesure de débit ou de consommation de carburant d'un véhicule.

La présente invention a pour but de remédier aux inconvénients précités par la mise en oeuvre d'un débitmètre dans lequel la mesure de débit résultant des mesures sur la voie aller et sur la voie retour est rendue indépendante, les interférences de mesure, effectuées par comptage, étant sensiblement réduites.

Un autre objet de la présente invention est la mise en oeuvre d'un système de mesure de débit ou de consommation à l'utilisation dans lesquelles les perturbations locales et temporaires précitées sont prises en compte par le système de comptage, les impulsions de comptage de la voie retour étant notamment mises en réserve pour comparaison avec les impulsions de la voie aller.

Selon l'invention, le débitmètre double flux pour la mesure de débit ou de consommation à l'utilisation de fluide d'une installation comprenant une voie aller comportant une première cellule de mesure de débit capable d'engendrer un signal représentatif du débit de fluide conduit par la voie aller vers l'utilisation, une voie retour comportant une deuxième cellule de mesure de débit capable d'engendrer un signal représentatif du débit de fluide conduit par la voie retour vers le réservoir de fluide et des moyens de traitement des signaux représentatifs des débits de fluide respectifs conduits par la voie aller et la voie retour pour engendrer un signal différence représentatif du débit effectivement consommé à l'utilisation est remarquable en ce que les moyens de traitement des signaux comportent des moyens de mise en forme d'impulsions des signaux représentatifs du débit de fluide conduit par la voie aller et des signaux représentatifs du débit de fluide conduit par la voie retour et des moyens de comptage-décomptage des impulsions, dites de comptage, délivrées respectivement par les moyens de mise en forme des signaux représentatifs du débit de fluide conduit par la voie aller et par la voie retour respectivement pour engendrer un signal représentatif du débit consommé effectivement à l'utilisation.

L'invention trouve application notamment dans les circuits d'alimentation en carburant de moteurs à double flux de carburant mobiles ou stationnaires.

Elle sera mieux comprise à la lecture de la description et à l'observations des dessins ci-après dans lesquels :

-la figure 1 représente un débitmètre dans une installation à conduite de fluide aller-retour,

-la figure 2 représente un schéma synoptique des moyens de traitement des signaux permettant d'obtenir un signal représentatif du débit consommé à l'utilisation,

-les figures 3a, 3b représentent un mode de réalisation préférentiel non limitatif des moyens de traitement tels que représentés en figure 2.

L'invention sera tout d'abord décrite en liaison avec les figures 1 et 2.

Sur la figure 1, l'installation de type classique a été représentée et peut correspondre de manière non limitative à l'installation d'alimentation en carburant d'un véhicule, dans laquelle 2 constitue une pompe d'alimentation, 3 le débitmètre comportant deux cellules de mesure de débit 31, 32 sur les voies aller respectivement retour, 4 la pompe d'injection du carburant, l'utilisation étant constituée par les injecteurs de carburant dans le moteur du véhicule. En 5, sont représentés des moyens de traitement des signaux représentatifs des débits de fluide respectifs, conduits par la voie aller et par la voie retour,pour engendrer un signal différence, lui-même représentatif du débit de fluide ou carburant effectivement consommé à l'utilisation.

Conformément à l'invention et ainsi que représenté de manière plus détaillée en figure 2, les moyens de traitement 5 des signaux comportent des moyens notés 51, 52 de mise en forme d'impulsions des signaux représentatifs du débit de fluide conduit par la voie aller et des signaux représentatifs du débit de fluide conduit par la voie retour.

A titre d'exemple non limitatif, les première et deuxième cellules de mesure de débit 31 et 32 peuvent être constituéespar des cellules du type débitmètre à roues ovales, l'une des roues ovales de chaque cellule comportant deux aimants permanents délivrant un flux magnétique alterné. De préférence, chaque aimant est orienté de façon à présenter à la détection un pôle Nord respectivement un pôle Sud, la détection étant elle-même effectuée pour chaque cellule par une sonde à effet Hall sensiblement bipolaire, c'est-à-dire une sonde capable de délivrer un signal présentant une transition d'un niveau bas à un niveau haut et réciproquement en fonction du signe de l'induction magnétique à laquelle la sonde est soumise. Ce type de sonde et de détection permet de diminuer le nombre d'éventuelles impulsions engendrées par une oscillation de roue d'une cellule de mesure, cette oscillation parasite pouvant être provoquée par l'entrée en vibration du fluide, par exemple, en fonction des conditions cinématiques du véhicule. L'utilisation de sondes bipolaires nécessite en fait un demi-tour inverse de roue ovale de la cellule de mesure pour engendrer une information erronée. Ce type de détection permet donc une amélioration de la sécurité sur les oscillations éventuelles des roues. A chaque tour de roue détecté par les sondes à effet Hall, correspond en fait un volume constant de fluide transmis par chacune des cellules de mesure 31, 32.

Des moyens de comptage-décomptage 53, 54 des impulsions,dites impulsions de comptage,délivrées respectivement par les moyens de mise en forme 51, 52 des signaux représentatifs du débit de fluide conduits par la voie aller et par la voie retour, permettent d'engendrer un signal représentatif du débit consommé effectivement à l'utilisation en 55.

Conformément à l'invention, les moyens de mise en forme d'impulsions des signaux représentatifs du débit de fluide conduit par la voie aller et par la voie retour permettent notamment une amélioration de la sécurité de détection en doublant sensiblement l'effet de la détection par une fonction d'inhibition du système de détection pour des fréquences de détection supérieures à la fréquence maximale des signaux détectés, correspondant au débit maximal des voies aller ou retour. En particulier, cette fonction d'inhibition permet sensiblement de rendre le système de détection insensible aux signaux provoqués par les oscillations de roue, lesquels ont une fréquence supérieure à la fréquence maximale précitée. Ainsi, cette fonction d'inhibition permet d'utiliser des sondes à effet Hall, pour lesquelles la détection n'est pas totalement bipolaire.

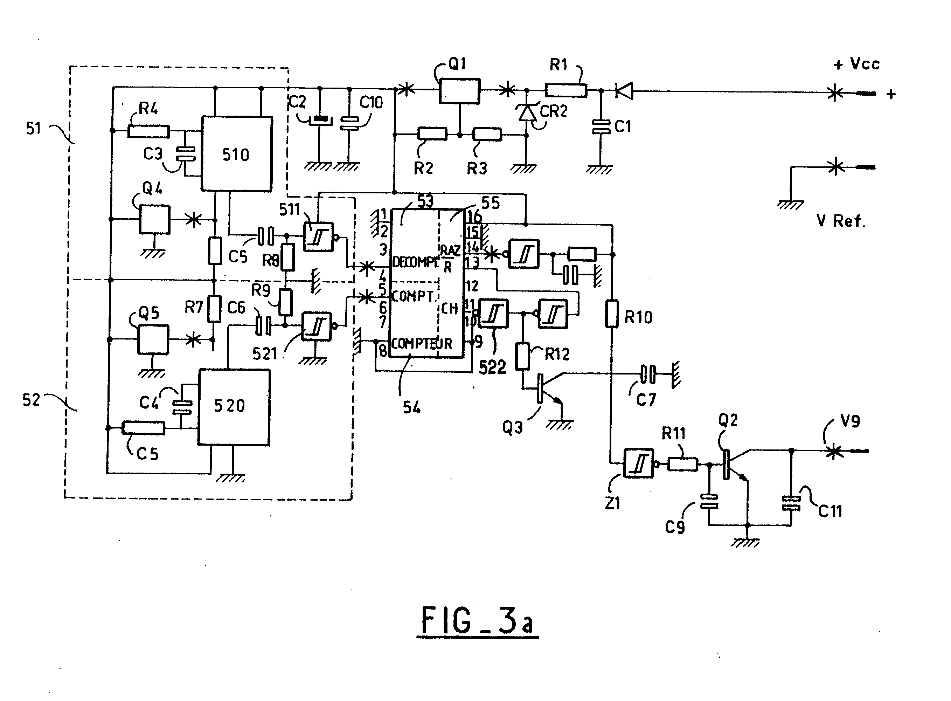

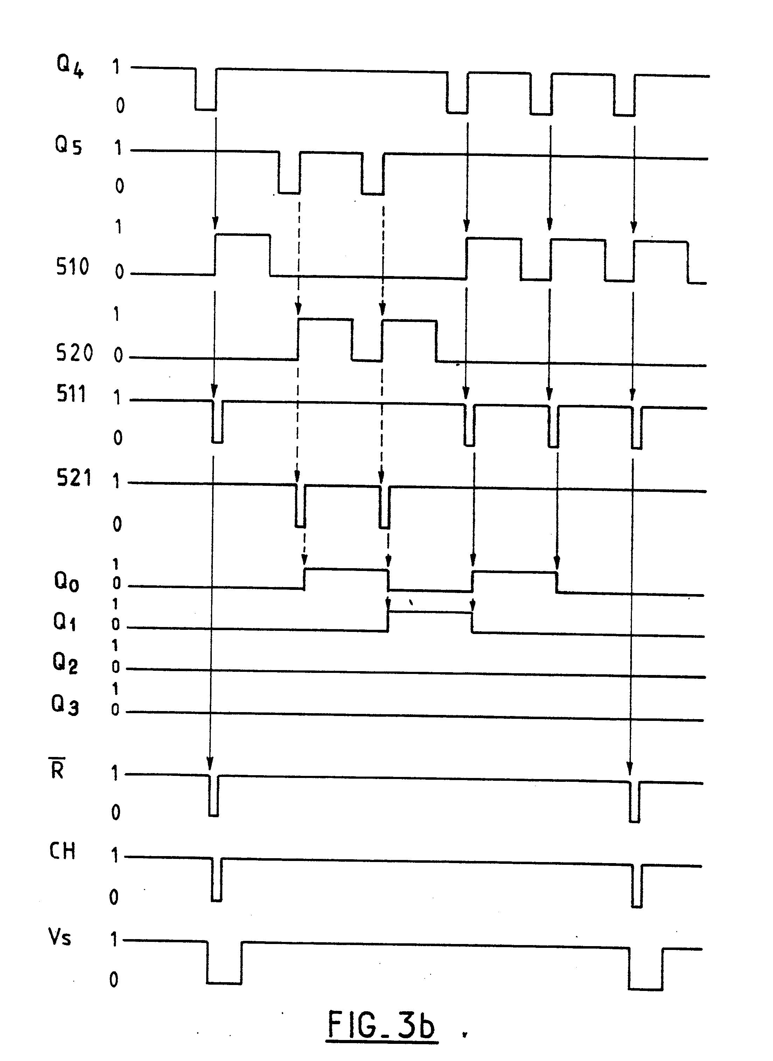

Dans ce but, les moyens de mise en forme 51, 52 comportent chacun, connectés en cascade, ainsi que représenté en figure 3,une première bascule monostable notée respectivement 510, 520, dont l'état métastable a une durée prédéterminée. Chaque première bascule monostable 510, 520, reçoit les signaux représentatifs du débit de fluide délivré par la première 31 respectivement deuxième 32 cellule de mesure de débit, par l'intermédiaire de leur sonde à effet Hall respective, notée Q4, Q5, sur la figure 3a.Une deuxième bascule monostable est connectée respectivement à chaque première bascule monostable 510, 520 et est déclenchée par celle-ci. L'état métastable de chaque deuxième bascule monostable est très inférieur en durée à la durée de l'état métastable des premières bascules monostables 510, 520. Sur la figure 3a, les deuxièmes bascules monostables sont constituées respectivement par la capacité notée C5, la résistance R8, le déclencheur 511 et par la capacité C6, la résistance R9 et le déclencheur 521. Les deuxièmes bascules monostables délivrent ainsi des impulsions de comptage pour la voie aller respectivement retour, aux moyens de comptage 53, 54.

Les signaux représentatifs des débits de fluide sur les voies aller et retour, signaux engendrés par les cellules à effet Hall, étant des signaux périodiques à fréquence variable représentative de la mesure du débit, la durée de l'état métastable des premiers monostables 510, 520 est choisie légèrement inférieure à la fréquence maximale des signaux de débit, correspondant au débit maximal admissible pour l'installation. De manière non limitative, la durée de l'état métastable des premières bascules monostables 510, 520 peut être choisie pour chacun d'elle égale à une même valeur, laquelle correspond à un débit maximal admissible pour l'ins tallation sur les voies aller et retour et par hypothèse de principe à une consommation nulle à l'utilisation. Bien entendu, le choix de la valeur réelle de l'état métastable des bascules monostables 510, 520 est choisi en fonction des paramètres réels de l'installation.

De la même manière, la durée de l'état métastable des deuxièmes bascules monostables est choisie inférieure ou égale à sensiblement 4 à 5 fois la résolution en durée des moyens de comptage. Les deuxièmes bascules monostables permettent ainsi d'engendrer des impulsions dites de comptage fines, permettant ainsi de rendre minimum le risque de recouvrement des impulsions de comptage des voies aller et retour, recouvrement susceptible d'engendrer un fonctionnement aléatoire des moyens de comptage-décomptage 53, 54 et une mesure de consommation entachée d'erreur. Ainsi, la mesure de débit résultant des mesures sur la voie aller et sur la voie retour est rendue au maximum indépendante des interférences de mesure effectuées par comptage.

Une description plus détaillée des moyens de comptage 53, 54 sera maintenant donnée au moyen de la figure 3a.

Sur cette figure, les moyens de comptage-décomptage sont constitués par un compteur-décompteur capable d'effectuer un comptage d'impulsions sur quatre bits, soit sur un nombre total de 16 impulsions. Le compteur-décompteur peut être constitué par tout compteur-décompteur normalement disponible dans le commerce, et comportant de préférence une entrée de comptage d'impulsions notée COMPT, une entrée de décomptage d'impulsions notée DECOMPT, une sortie de retenue et sa sortie complémentée notée $\bar{R}$ , une sortie de chargement notée CH, une entrée de remise à zéro notée RAZ, permettant une remise à zéro du compteur-décompteur, et 4 bits de présélection.

A titre d'exemple non limitatif, la sortie des deuxièmes bascules monostables, c'est-à-dire respectivement la sortie des triggers 511, 521, sortie délivrant les impulsions de comptage pour la voie aller respectivement la voie retour, sont respectivement connectées aux entrées de comptage et de décomptage COMPT, DECOMPT du compteur-décompteur. Ce mode de réalisation n'est pas représenté en figure 3a. Dans ce cas, le compteur-décompteur est prépositionné à 1 sur l'ensemble des bits de comptage au moyen de l'entrée notée CH et des 4 bits de présélection et la sortie est prise sur la sortie de retenue R. Cependant, l'entrée de remise à zéro doit dans ce cas rester inactivée et toute remise à zéro à la mise sous tension est impossible, le compteur-décompteur se positionnant alors entre 0 et 15 de manière aléatoire. Le comptage peut cependant être effectué, chaque impulsion délivrée par la voie aller pouvant être transmise sur la sortie R à partir de la position pré-établie à 1 du compteur.

Ce mode de réalisation ne permet cependant pas d'effectuer une remise à zéro à la mise sous tension parce que le compteur est prépositionné à 1 (1111) par l'entrée CH.

Afin de remédier à l'inconvénient précité, et de manière préférentielle ainsi que représenté en figure 3a, la sortie des deuxièmes bascules monostables, sortie des déclencheurs 511, 521, est respectivement connectée aux entrées de décomptage DECOMPT et de comptage COMPT du compteur-décompteur. Les quatre bits de sortie du compteur-décompteur sont alors prépositionnés à zéro par quatre bits de prépositionnement sur une impulsion de charge délivrée sur l'entrée CH. La sortie du compteur délivrant l'information utile et la sortie de retenue complémentée notée $\bar{R}$ , laquelle fournit une impulsion lorsque les quatre bits de sortie sont à zéro et lorsqu'une impulsion de comptage de la voie aller apparaît sur l'entrée décomptage DECOMPT. Le présent mode de réalisation permet ainsi,sensiblement,une mise en réserve des impulsions de comptage de la voie de retour à concurrence de la capacité totale ou partielle de comptage du compteur-décompteur pour une comparaison logique avec les impulsions de comptage délivrées par la voie aller.

Il apparaît ainsi que le réservoir d'impulsions ainsi constitué doit être vide, c'est-à-dire les quatre bits de sortie du compteur étant égaux à 0 pour qu'une impulsion de comptage sur la voie aller se transforme en une impulsion de consommation effective sur la sortie de retenue complémentée $\bar{R}$ et sur les circuits d'exploitation de l'information de consommation. Chaque impulsion de comptage sur la voie retour incrémente le compteur-décompteur. Chaque impulsion sur la voie aller décrémente le compteur si les quatre bits de comptage ne sont pas à zéro. Bien entendu, si les quatre bits précités sont à zéro, une impulsion de comptage sur la voie aller donne lieu à une impulsion sur la sortie de retenue complémentée, laquelle n'est autre qu'une recopie de l'impulsion de comptage sur l'entrée DECOMPT. L'impulsion obtenue sur la sortie de retenue complémentée déclenche bien entendu les circuits d'exploitation de l'information pour engendrer une impulsion de consommation.

Les circuits d'exploitation de l'impulsion de consommation délivrés par la sortie de retenue complémentée $\bar{R}$ comportent de préférence,en figure 3a, un monostable de sortie directement connecté à la sortie de retenue complémentée, lequel délivre l'impulsion de consommation à un transistor de commutation noté Q3, permettant en fait une mise en forme appropriée de l'impulsion de consommation précitée. La mise en forme de cette impulsion est assurée par le circuit de constante de temps R10, C7 pour lequel la décharge complète de la capacité C7 est assurée au moyen du transistor Q3 monté en émetteur commun. Un étage de sortie et de découplage peut en outre être prévu de façon à assurer au moyen d'un monostable de sortie noté Z1, d'un transistor deséparation noté Q2 et de capacités de découplage C9, C11, la transmission des impulsions de consommation vers une utilisation ou exploitation. En outre, dans le mode de réalisation tel que décrit en figure 3a, le compteur-décompteur est positionné à l'état zéro par un circuit de remise à zéro opérant dès la mise sous tension du débitmètre. Une tension d'alimentation sensiblement constante étant fournie à partir d'une alimentation générale +Vcc, Vref par l'intermédiaire d'un circuit de régulation de type classique CR2, Q1, la tension d'alimentation dès la mise sous tension déclenche par R13, C8 un trigger dont la sortie est connectée à l'entrée de remise à zéro.

En outre, l'impulsion de consommation délivrée, par le trigger de mise en forme,au transistor de commutation Q3 est également appliquée à l'entrée de chargement CH du compteur par l'intermédiaire d'un déclencheur de prépositionnement noté 522. Grâce au retard introduit par les deux triggers successifs sur l' impulsion de retenue complémentée $\bar{R}$, l'impulsion résultante appliquée sur l'entrée CH est toujours présente lors du front de montée appliqué sur l'entrée DECOMPT ce qui interdit la prise en compte de cette impulsion en maintenant les quatre bits du compteur-décompteur à zéro.

On a ainsi décrit un mode de réalisation dans lequel une mise en réserve des impulsions de la voie retour est en quelque sorte effectuée et non pas une soustraction en temps réel. Ce mode de réalisation apparaît particulièrement avantageux dans le cas notamment où le débit ou flux de fluide de la voie retour est supérieur à celui de la voie aller. Ce phénomène est dû à certains types de pompes d'injection notamment en fonction de la cinématique du véhicule, c'est-à-dire de la densité de circulation, du mode de conduite, tel que relâchement rapide de la pédale d'accélérateur ou analogue.

Bien entendu, plusieurs compteurs mis en cascade peuvent permettre d'augmenter la capacité de la réserve ou du réservoir d'impulsions ainsi constitué , celle-ci correspondant à la somme des capacités de chaque compteur-décompteur utilisé.

On trouvera en particulier en figure 3b un diagramme des temps relatif aux différents signaux engendré par les différents éléments de la figure 3a. On pourra constater en particulier sur cette figure que,conformément à l'invention, lorsque deux impulsions de comptage apparaissent sur la voie retour en 521, celles-ci sont en quelque sorte mises en réserve ainsi que décrit précédemment par le compteur décompteur et qu'une impulsion de consommation n'est délivrée par la sortie de retenue complémentée $\bar{R}$ ,ou par le circuit d'exploitation en Vs, que lorsqu'un nombre d'impulsions supérieur d'une unité à celui du nombre d'impulsions sur la voie retour, apparaît effectivement sur la voie aller, les impulsions apparues sur la voie retour ayant ainsi été mises en réserve pour neutralisation avec les impulsions de la voie aller.

Il va de soi que toute variante de réalisation ne sort pas du cadre de la présente invention. En particulier, il est bien entendu possible à partir des sorties complémentées des premiers monostables 510 et 520 d'effectuer soit un contrôle des cellules de mesure de débit sans perturber le comptage, soit un calcul de la mesure de consommation à fréquence différente. De plus, le traitement des impulsions peut également être effectué au moyen d'un microprocesseur.

## Revendications

1. Débitmètre double flux pour la mesure de débit ou de consommation à l'utilisation de fluide d'une installation comprenant une voie aller comportant une première cellule de mesure de débit capable d'engendrer un signal représentatif du débit de fluide conduit par ladite voie aller vers l'utilisation,une voie retour comportant une deuxième cellule de mesure de débit capable d'engendrer un signal représentatif du débit du fluide conduit par la voie retour vers le réservoir de fluide et des moyens de traitement des signaux représentatifs des débits de fluide respectifs conduits par la voie aller et la voie retour pour engendrer un signal différence représentatif du débit effectivement consommé à l'utilisation, caractérisé en ce que lesdits moyens de traitement des signaux comportent:

-des moyens de mise en forme d'impulsions des signaux représentatifs du débit de fluide conduit par la voie aller et des signaux représentatifs du débit de fluide conduit par la voie retour,

-des moyens de comptage-décomptage des impulsions délivrées respectivement par les moyens de mise en forme des signaux représentatifs du débit de fluide conduit par la voie aller et par la voie retour respectivement pour engendrer un signal représentatif du débit consommé effectivement à l'utilisation.

2. Débitmètre selon la revendication 1, caractérisé en ce que lesdits moyens de mise en forme d'impulsions des signaux représentatifs du débit de fluide conduit par la voie aller et par la voie retour comportent chacun connectés en cascade :

-une première bascule monostable dont l'état métastable a une durée prédéterminée, ladite première bascule monostable recevant lesdits signaux représentatifs du débit de fluide délivrés par la première respectivement deuxième cellule de mesure de débit,

-une deuxième bascule monostable, recevant le signal délivré par la première, dont l'état métastable a une durée prédéterminée très inférieure à la durée de l'état métastable de la première bascule, ladite deuxième bascule délivrant les impulsions de comptage pour la voie aller respectivement retour auxdits moyens de comptage-décomptage.

3. Débitmètre selon la revendication 2, caractérisé en ce que les signaux représentatifs des débits de fluide sur les voies aller et retour étant des signaux périodiques à fréquence variable représentative de la mesure du débit, la durée de l'état métastable desdits premiers monostables est légèrement inférieure à la fréquence maximale desdits signaux correspondants au débit maximal admissible des voies aller ou retour.

4. Débitmètre selon l'une des revendications 2 ou 3 précédentes, caractérisé en ce que la durée de l'état métastable des deuxièmes bascules monostables est choisie inférieure ou égale à sensiblement 4 à 5 fois la résolution en durée des moyens de comptage.

5. Débitmètre selon l'une des revendications 1 à 4 précédentes, caractérisé en ce que les moyens de comptage-décomptage sont constitués par un compteur-décompteur comprenant :

-une entrée de comptage d'impulsions,

-une entrée de décomptage d'impulsions,

-une sortie de retenue et sa sortie complémentée

-une entrée de remise à zéro permettant une remise à zéro du compteur-décompteur.

-une entrée de chargement des 4 bits de présélection.

6. Débitmètre selon la revendication 5, caractérisé en ce que la sortie des deuxièmes bascules monostables délivrant les impulsions de comptage pour la voie aller respectivement retour sont respectivement connectées aux entrées de comptage et de décomptage du compteur-décompteur.

7. Débitmètre selon la revendication 5, caractérisé en ce que la sortie des deuxièmes bascules monostables délivrant les impulsions de comptage pour la voie aller respectivement retour est respectivement connectée aux entrées de décomptage et de comptage du compteur-décompteur, lesdites impulsions de comptage de la voie retour étant ainsi mises en réserve à concurrence de la capacité partielle ou totale de comptage du compteur-décompteur pour comparaison avec les impulsions de comptage délivrées par la voie aller.

8. Débitmètre selon la revendication 7, caractérisé en ce que à la mise sous tension du débitmètre, le compteur-décompteur est positionné à l'état zéro par un circuit de remise à zéro.

9. Débitmètre selon l'une des revendications 5, 7 ou 8, caractérisé en ce que sur la sortie complémentée de retenue du compteur-décompteur est monté par l'intermédiaire d'une bascule monostable, un circuit d'exploitation consistant en un premier transistor de commutation en émetteur commun, et en un étage de sortie.

## FIG_1

## FIG_2

FIG_3a

0 210 908

FIG_3b .

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| A | US-A-3 029 637  (H. FELLOWS)<br>* Revendications 1-6 * | 1 | G 01 F    9/00 |
| A | GB-A-2 020 817  (NIPPON ELECTRIC CO.)<br>* Revendications 5-9 * | 1 | |
| A | EP-A-0 101 804  (ELDEX CORP.) | | |
| A | EP-A-0 104 978  (AERO PRODUCT EUROPA) | | |
| A | DE-A-3 041 480  (ROBERT BOSCH GmbH) | | |
| A | FR-A-2 431 122  (R. FERBOS et al.) | | |

DOMAINES TECHNIQUES RECHERCHES (Int Cl 4)

G 01 F

Le present rapport de recherche a été établi pour toutes les revendications

| Lieu de la recherche | Date d'achèvement de la recherche | Examinateur |
|---|---|---|
| LA HAYE | 20-10-1986 | VAN DEN BULCKE E. |